# EUROPÄISCHE PATENTSCHRIFT

(11) **EP 0 992 710 B1**
(45) Veröffentlichungstag und Bekanntmachung des Hinweises auf die Patenterteilung: **24.11.2004**
(21) Anmeldenummer: 99118129.8
(22) Anmeldetag: 11.09.1999
(51) Int. Cl.: F16H 35/06

(54) **Doppelseitige Drehmomentstütze**
Double sided torque support
Support à couple de rotation de deux côtés

(30) Priorität: 08.10.1998 DE 19846328
(43) Veröffentlichungstag der Anmeldung: 12.04.2000
(73) Patentinhaber: A. Friedr. Flender AG, 46395 Bocholt (DE)
(72) Erfinder: Chun, Gil-Hwan, 46499 Hamminkeln (DE)
(74) Vertreter: Radünz, Ingo, Dipl.-Ing.

(56) Entgegenhaltungen:
- DE-B- 1 171 690
- FR-A- 1 305 474
- US-A- 1 161 531
- US-A- 4 467 666
- US-A- 4 500 054
- US-A- 5 003 835

## Beschreibung

Die Erfindung betrifft eine doppelseitige Drehmomentstütze für ein auf die Maschinenwelle einer Arbeitsmaschine aufgestecktes Getriebe mit den Merkmalen des Oberbegriffes des Patentanspruches 1.

Aufsteckgetriebe, die auf der Maschinenwelle einer Arbeitsmaschine drehstarr montiert sind, benötigen eine Drehmomentstütze, welche die Kraft aus dem Reaktionsmoment in einen festen Anbindungspunkt am Fundament einleitet. Hierbei ist der Abstand zwischen der Maschinenwelle und dem Festpunkt genau definiert. Die Drehmomentstütze muß eine Verlagerung des Achsmittelpunktes der Maschinenwelle zulassen. Derartige Verlagerungen ergeben sich beispielsweise, wenn bei Walzenantrieben unterschiedliche Materialdicken verarbeitet werden sollen oder wenn bei Zerkleinerungsmaschinen die angetriebene Walzenachse über eine Hydraulik angestellt wird. Verlagerungen treten auch bei Wärmedehnungen auf.

Bei einer bekannten doppelseitigen Drehmomentstütze sind die an die Hebelplatte angreifenden Koppelstangen über eine Torsionswelle miteinander gekoppelt. Die Torsionswelle ist in zwei Lagerböcken gehalten, die an einer senkrechten Wand oder auf einem waagerechten Fundament montiert sind. Durch die Drehmomentstütze sind die Arbeitsmaschinenlager bis auf die Gewichtskräfte von Querkräften freigehalten. Verlagerungen der Maschinenwelle werden bezogen auf das Fundament kräftefrei weitergeleitet.

Aus der US-A-4 467 666 ist eine doppelseitige Drehmomentstütze für ein aufgestecktes Getriebe bekannt, dessen Gehäuse mit zwei Gelenklagern versehen ist. Die Gelenklager sind mit ortsfesten Lagern über gelenkig gelagerte Stäbe verbunden, die aus Lenkstangen bestehen, die in Gelenklagern jeweils mit einer Stützstange und untereinander durch eine Zug-Druck-Stange verbunden sind.

Aus der DE 11 71 690 B ist eine Drehmomentstütze bekannt, die zwei an dem festzuhaltenden Maschinenteil befestigte Hebel umfaßt. Jeder der Hebel ist gelenkig mit einer Stange verbunden, die an einen Endpunkt eines zweiarmigen Hebels angreift. Der andere Endpunkt des zweiarmigen Hebels ist an einen ortsfesten Lagerbock angelenkt. Die beiden zweiarmigen Hebel sind parallel zueinander ausgerichtet und in ihren Drehachsen durch eine Stange gelenkig verbunden.

Der Erfindung liegt die Aufgabe zugrunde, die ebengenannte gattungsgemäße Drehmomentstütze derart zu gestalten, daß die Reaktionskräfte mit einfacheren Mitteln in das Fundament eingeleitet werden, ohne die Maschinenwelle zu belasten.

Diese Aufgabe wird bei einer gattungsgemäßen Drehmomentstütze erfindungsgemäß durch die kennzeichnenden Merkmale des Patentanspruches 1 gelöst. Vorteilhafte Ausgestaltungen der Erfindung sind Gegenstand der Unteransprüche.

Bei der erfindungsgemäßen Drehmomentstütze belasten ebenso wie bei der bekannten Drehmomentstütze lediglich die Gewichtskräfte die Maschinenwelle. Auch werden hier Verlagerungen der Maschinenwelle bezogen auf das Fundament kräftefrei weitergeleitet. Durch die Verwendung des Hebelsystems zeichnet sich jedoch die erfindungsgemäße Drehmomentstütze durch eine einfache und damit kostengünstige Bauweise aus, da die Anbindungspunkte einfache Bohrungen sind. Eine teure Torsionswelle kann entfallen.

Mehrere Ausführungsbeispiele der Erfindung sind in der Zeichnung dargestellt und werden im folgenden näher erläutert.
Es zeigen:
- Fig. 1: die Seitenansicht einer Drehmomentstütze,
- Fig. 2: den Schnitt II - II nach Fig. 1
- Fig. 3: die Seitenansicht einer anderen, nicht beanspruchten Drehmomentstütze, die der Veranschaulichung der Fachgebietes dient, und
- Fig. 4 und 5: die Drehmomentstütze nach Fig. 3 für unterschiedliche Verlagerungsfälle.

Ein Getriebe 2, hier als Beispiel ein Planetengetriebe ist auf die Maschinenwelle 1 einer Arbeitsmaschine aufgesteckt und dort drehstarr montiert. Zur Aufnahme des Reaktionsmomentes des aufgesteckten Getriebes 2 ist mit dem Gehäuse des Getriebes 2 eine Hebelplatte 3 verbunden. Die Hebelplatte 3 ist vorzugsweise symmetrisch zu einer durch die Maschinenwelle 1 verlaufenden Ebene ausgebildet. Die Hebelplatte 3 ist mit zwei vorzugsweise symmetrisch angeordneten Koppelpunkten 4 versehen.

Die in den Koppelpunkten 4 wirkenden Reaktionskräfte sind der Größe nach gleich, jedoch sind ihre Richtungen einander entgegengesetzt. Es handelt sich somit um ein Kräftepaar, welches ein Gegenmoment zu dem Getriebeabtriebsmoment erzeugt. Die entgegengesetzte Richtung der Kräfte bewirkt, daß die Lager, die auf der Maschinenachse liegen, nämlich die Maschinenwellenlager und die Lager der Getriebeausgangsseite, nicht durch Kräfte aus der Drehmomentstütze belastet werden.

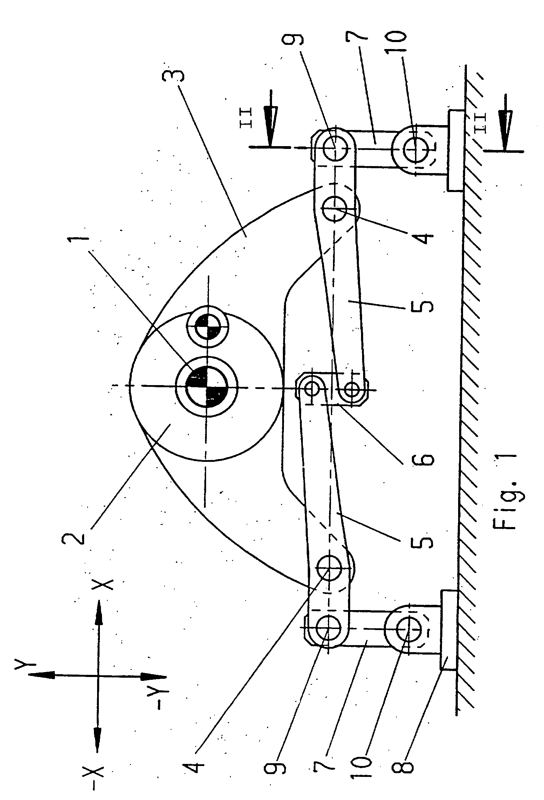

Bei der in Fig. 1 dargestellten Drehmomentstütze ist in den beiden Koppelpunkten 4 der Hebelplatte 3 jeweils ein Hebel 5 mit ungleich langen Hebelarmen beweglich angeordnet. Die nach innen gerichteten Hebelarme der Hebel 5 sind über eine zweite Koppelstange 6 gelenkig miteinander verbunden. Die Gelenke zwischen der zweiten Koppelstange 6 und den Hebeln 5 liegen vorzugs- aber nicht notwendigerweise in der Symmetrieebene der Hebelplatte 3. Die nach außen gerichteten Hebelarme der Hebel 5 sind über jeweils eine erste, Gelenkpunkte 9, 10 aufweisende Koppelstange 7 mit Lagerböcken 8 beweglich verbunden. Die Lagerböcke 8 sind an dem Maschinenfundament befestigt und stellen die einzigen Festpunkte des Systems dar.

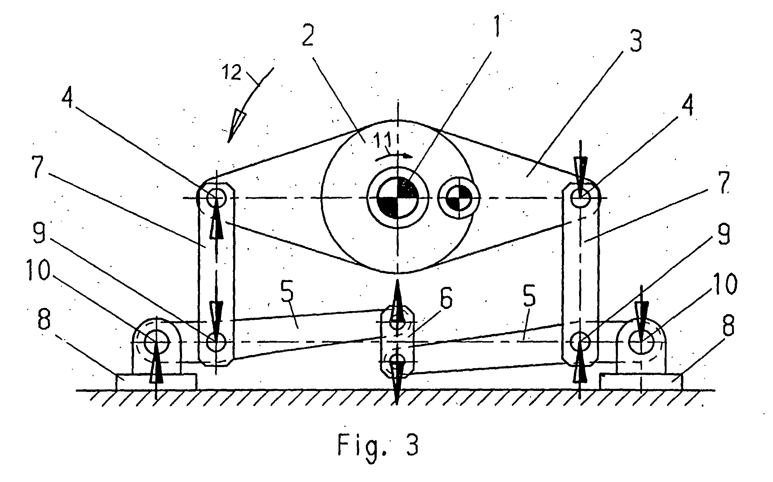

Bei der in Fig. 3 dargestellten nicht beanspruchten Drehmomentstütze sind die ersten Koppelstangen 7 jeweils in einem Gelenkpunkt 9 mit den Koppelpunkten 4 der Hebelplatte 3 und in dem anderen Gelenkpunkt 10 mit den Hebeln 5 verbunden. Die nach innen weisenden Hebelarme der Hebel 5 sind wiederum mit der zweiten Koppelstange 6 verbunden. Die nach außen weisenden Hebelarme der Hebel 5 sind in den Lagerböcken 8 gelagert.

Die beschriebene Anordnung der Hebel 5 ermöglicht sowohl bei der Drehmomentstütze gemäß Fig. 1 als bei der gemäß Fig. 3 eine Verlagerung der Maschinenachse in horizontaler Richtung +X, -X sowie in vertikaler Richtung +Y, -Y. Dreht, wie in Fig. 3 dargestellt, die Maschinenwelle 1 in Richtung des Pfeiles 11, so entsteht ein Drehmoment in Richtung des Pfeiles 12.

Über die Koppelstangen 6, 7 und die Hebel 5 entstehen in die Gelenk- und Koppelpunkten der Koppelstangen 6, 7 und Hebel 5 Kräfte, deren Richtung durch Pfeile angezeigt ist.

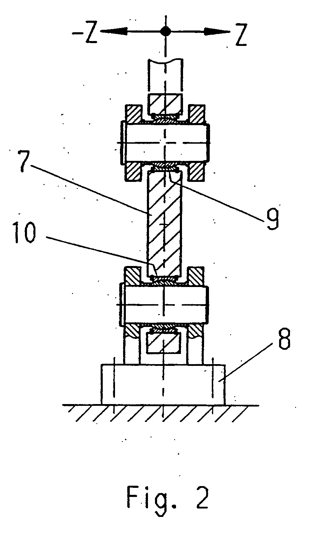

Die Gelenkpunkte 9, 10 der ersten Koppelstangen 7 sind vorzugsweise als Schwenklager ausgebildet und mit sphärischen Lagerschalen versehen (Fig. 2). In diesem Fall ergibt sich zusätzlich eine Beweglichkeit in einer dritten Richtung +Z, -Z, senkrecht zu den Richtungen X und Y.

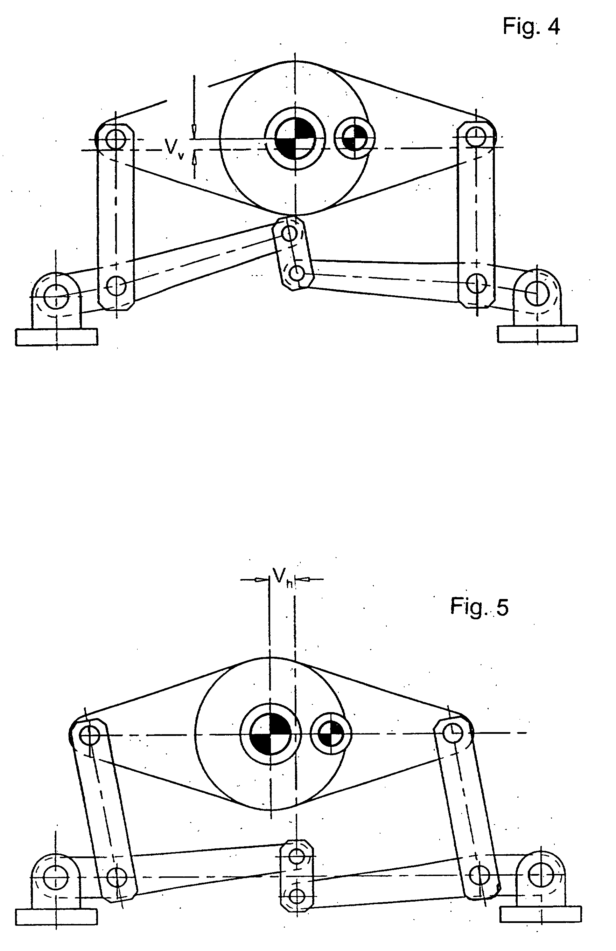

In der Fig. 4 ist die Stellung der Hebel und Koppelstangen der Drehmomentstütze gemäß Fig. 3 gezeigt, wenn sich die Maschinenwelle um einen Versatz Vᵥ in vertikaler Richtung verlagert hat. Fig. 5 zeigt die entsprechende Stellung der Hebel und Koppelstangen bei einem Versatz Vₕ in horizontaler Richtung.

## Patentansprüche

1. Doppelseitige Drehmomentstütze für ein auf die Maschinenwelle (1) einer Arbeitsmaschine aufgestecktes Getriebe (2) bestehend aus einer Hebelplatte (3), die vorzugsweise symmetrisch zu einer durch die Maschinenwelle (1) der Arbeitsmaschine verlaufenden Ebene ausgebildet ist, die an dem feststehenden Getriebeteil des Getriebes (2) befestigt ist und die über zwei erste Koppelstangen (7) und zwei zweiarmige, über eine zweite Koppelstange (6) miteinander verbundene Hebel (5) mit ortsfesten Lagern (8) gelenkig in Verbindung steht, **dadurch gekennzeichnet, daß** die Hebelplatte (3) über zwei Koppelpunkte (4) an jeweils einen der beiden zweiarmigen Hebel (5) angreift, daß die Drehpunkte der zweiarmigen Hebel (5) beiderseits des Angriffspunktes der Hebelplatte (3)an den beiden zweiarmigen Hebeln (5) liegen, daß die Drehpunkte auf den einen nach außen, von der Maschinenachse (1) weg weisenden Hebelarmen der zweiarmigen Hebel (5) mit den ortsfesten Lagern (8) in Verbindung stehen und daß die Drehpunkte auf den anderen nach innen, auf die Maschinenachse (1) hin weisenden Hebelarmen der zweiarmigen Hebel (5) über die zweite Koppelstange (6) miteinander verbunden sind.

2. Drehmomentstütze nach Anspruch 1, **dadurch gekennzeichnet daß** die Gelenke zwischen der zweiten Koppelstange (6) und den Hebeln (5) in der durch die Maschinenwelle (1) der Arbeitsmaschine verlaufenden Symmetrieebene liegen.

3. Drehmomentstütze nach Anspruch 1 oder 2, **dadurch gekennzeichnet, daß** die Drehpunkte der ersten Koppelstangen (7) als Schwenklager ausgebildet sind.

## Claims

1. Double-sided torque support for a gear (2) which is plugged onto the machine shaft (1) of an operating machine and which consists of a lever plate (3), which is preferably constructed symmetrically with respect to a plane extending through the machine shaft (1) of the operating machine and is fastened to the stationary gear part of the gear (2) and which is disposed in pivotable connection by way of two first coupling rods (7) and two double-arm levers (5), which are connected together by way of a second coupling rod (6), with stationary bearings (8), **characterised in that** the lever plate (3) engages by way of two coupling points (4) each time at one of the two double-armed levers (5), that the fulcra of the double-armed levers (5) lie on either side of the point of action of the lever plate (3) at the two double-armed levers (5), that the fulcra on the one lever arms, which point outwardly away from the machine axle (1), of the double-armed levers (5) are disposed in connection with the stationary bearings (8) and that the fulcra of the other lever arms, which point inwardly towards the machine axle (1), of the double-armed lever (5) are connected together by way of the second coupling rod (6).

2. Torque support according to claim 1, **characterised in that** the joints between the second coupling rod (6) and the levers (5) lie in the plane of symmetry running through the machine shaft (1) of the operating machine.

3. Torque support according to claim 1 or 2, **characterised in that** the fulcra of the first coupling rods (7) are formed as pivot bearings.

## Revendications

1. Bras de réaction double pour un engrenage (2) mis en place sur l'arbre de machine (1) d'une machine de travail, constitué d'une plaque pour leviers (3), qui est réalisée de préférence de manière symétrique à un plan passant par l'arbre de machine (1) de la machine de travail, qui est fixée à la partie d'engrenage fixe de l'engrenage (2) et qui, par l'intermédiaire de leviers (5) reliés l'un à l'autre par deux premières tiges de couplage (7) et une deuxième tige de couplage (6) à deux bras, est en liaison articulée avec deux paliers fixes (8), **caractérisé en ce que**, par l'intermédiaire de deux points de couplage (4) la plaque pour leviers (3) vient en prise respectivement sur l'un des deux leviers (5) à deux bras, que les points de rotation des leviers (5) à deux bras se situent de part et d'autre du point d'attaque de la plaque pour leviers (3) sur les deux leviers (5) à deux bras, que, sur les bras de levier des leviers à deux bras (5), orientés vers l'extérieur en éloignement de l'axe de machine (1), les points de rotation sont en liaison avec les paliers fixes (8) et que sur les autres bras de levier des leviers à deux bras (5), orientés vers l'intérieur dans la direction de l'axe de machine (1), les points de rotation sont reliés l'un à l'autre par l'intermédiaire de la deuxième tige de couplage (6).

2. Bras de réaction selon la revendication 1, **caractérisé en ce que** les articulations entre la deuxième tige de couplage (6) et les leviers (5) se situent dans le plan de symétrie passant par l'arbre de machine (1) de la machine de travail.

3. Bras de réaction selon la revendication 1 ou 2, **caractérisé en ce que** les points de rotation des premières tiges de couplage (7) sont réalisés en paliers pivotants.
